# EUROPEAN PATENT APPLICATION

(11) **EP 3 373 375 A1**
(43) Date of publication of application: **12.09.2018**
(21) Application number: 17159767.7
(22) Date of filing: 08.03.2017
(51) Int. Cl.: H01M 10/052, H01M 10/0567

(54) **USE OF ALIPHATIC DINITRILES IN ELECTROCHEMICAL CELLS FOR REDUCING METAL LEACHING**

(71) Applicant: BASF SE, 67056 Ludwigshafen am Rhein (DE)
(72) Inventor: CHESNEAU, Frederick Francois, Ludwigshafen 67056 (DE); HOECKER, Johannes David, Ludwigshafen 67056 (DE); MALKOWSKY, Itamar Michael, 200137 Shanghai (CN); STIER, Janina, Ludwigshafen 67056 (DE); KLAUS, Wolfgang, Ludwigshafen 67056 (DE); MEINI, Stefano, 81545 München (DE); NOGUCHI, Hiroyoshi, 106-6121 Tokyo (JP); SEKINE, Masaki, 106-6121 Tokyo (JP)
(74) Representative: BASF IP Association

(57) **Abstract**

Use of an aliphatic dinitrile of formula (I)

NC-L-CN (I)

wherein L is selected from C₅ to C₁₀ cycloalkylene, C₅ to C₂₀ alkylene in case both CN-groups are bound to primary C-atoms of the alkylene chain, and C₄ to C₂₀ alkylene in case at least one CN-group is not bound to a primary C-atom of the alkylene chain,
for reducing metal leaching from electrode active material present in electrochemical cells.

## Description

The present invention relates to the use of aliphatic dinitriles for reducing metal leaching from electrode active material present in electrochemical cells.

Storing electrical energy is a subject of still growing interest. Efficient storage of electric energy would allow electric energy to be generated when it is advantageous and used when needed. Secondary electrochemical cells are well suited for this purpose due to their reversible conversion of chemical energy into electrical energy and vice versa (rechargeability). Secondary lithium batteries are of special interest for energy storage since they provide high energy density and specific energy due to the small atomic weight of the lithium ion, and the high cell voltages that can be obtained (typically 3 to 5 V) in comparison with other battery systems. For that reason, these systems have become widely used as a power source for many portable electronics such as cellular phones, laptop computers, mini-cameras, etc.

Secondary lithium batteries like lithium ion batteries typically comprise electrolyte compositions containing one or more organic aprotic solvents liked non-aqueous solvents like organic carbonates, ethers, esters and ionic liquids, at least one conducting salt like LiPF₆ and optionally one or more additives for enhancing the performance of electrolyte composition and battery. Useful additives are for example SEI additives, flame retardant additives, water scavenger, and overcharge protection additives. A lot of research is ongoing in respect to additives for use in electrolyte compositions to further improve the performance of the electrochemical cell containing the electrolyte composition in many different aspects, e.g. cycle life time, high temperature characteristics, safety, etc.

US 2013/0337346 A describes the use of a branched dinitrile compound together with an unbranched aliphatic dinitrile and/or a fluorine containing cyclic carbonate in electrolytic solutions in electrochemical cells for improving the electric discharge property at low temperature after storage at high temperature.

Another problem arising in electrochemical cells is the leaching of metal ions from the electrode active material present in the battery. In particular cathode active materials comprising transition metal compounds like lithium transition metal phosphates and lithium transition metal oxides are prone to metal leaching of transition metal ions, i.e. metal ions from the cathode active material are dissolved in the electrolyte composition. Thereby the amount of electrode active material in the cathode is reduced and the dissolved transition metal ions may cause problems on the electrodes by catalyzing decomposition of electrolyte ingredients. There is the need for additives reducing the undesired metal leaching of metal ions from electrode active material present in an electrochemical cell and to provide additives which have positive effects on the electrochemical cell without increasing the metal leaching. It was the object of the present invention to provide such additives.

This object is achieved by the use of an aliphatic dinitrile of formula (I)

NC-L-CN (I)

wherein L is selected from C₅ to C₁₀ cycloalkylene, C₅ to C₂₀ alkylene in case both CN-groups are bound to primary C-atoms of the alkylene chain, and C₄ to C₂₀ alkylene in case at least one CN-group is not bound to a primary C-atom of the alkylene chain,
for reducing metal leaching from electrode active material present in electrochemical cells.

The addition of an aliphatic dinitrile NC-L-CN as defined above to an electrolyte composition in an electrochemical cell results in reduced metal ion dissolution from the electrode active material present in the cell compared to electrolyte compositions containing no aliphatic dinitrile or containing an aliphatic dinitrile having less C-atoms.

In the following the invention is described in detail.

The invention relates to the use of aliphatic dinitriles of formula (I)

NC-L-CN (I)

wherein L is selected from C₅ to C₁₀ cycloalkylene, C₅ to C₂₀ alkylene in case both CN-groups are bound to primary C-atoms of the alkylene chain, and C₄ to C₂₀ alkylene in case at least one CN-group is not bound to a primary C-atom of the alkylene chain,
for reducing metal leaching from electrode active material present in electrochemical cells.

The invention also relates to a method for reducing metal leaching from an electrode active material present in an electrochemical cell by adding an aliphatic dinitrile of formula (I) to an electrolyte composition in an electrochemical cell or by treating the electrode active material or the electrodes with a dinitrile of formula (I).

The term "C₅ to C₁₀ cycloalkylene" as used herein means a saturated 5- to 10-membered hydrocarbon cycle having two free valences. Examples of C₅ to C₁₀ cycloalkylene include cyclopentylene, cyclohexylene, cycloheptylene, cyclootylene, cyclononylene, and cyclodecylene.

The term "C₄-C₂₀ alkylene" as used herein means a straight or branched saturated hydrocarbon group with 4 to 20 carbon atoms having two free valences, e.g. n-butylene, n-pentylene, 2-methylbutylene, n-hexylene, 2-methylpentylene, 3-methylpentylene, n-heptylene, n-octylene, n-nonylene, n-decylene, n-undecylene, n-dodecylene, and the like.

The aliphatic dinitrile NC-L-CN may be selected from dinitriles, wherein L is a C₅ to C₁₀ cycloalkylene, e.g. L is selected from cyclopentylene, cyclohexylene, cycloheptylene, cyclootylene, cyclononylene, and cyclodecylene, preferred is cyclohexylene. Examples of such dinitriles are 1,2-dicyanocyclopentane, 1,3-dicyanocyclopentane, 1,2-dicyanocyclohexane, 1,3-dicyanocyclohexane, 1,4-dicyanocyclohexane, 1,2-dicyanocycloheptane, 1,3-dicyanocycloheptane, 1,4-dicyanocycloheptane, 1,2-dicyanocyclooctane, 1,3-dicyanocyclooctane, 1,4-dicyanocyclooctane, 1,5-dicyanocyclooctane, 1,2-dicyanocyclononane, and 1,2-dicyanocyclodecane. Preferred is 1,4-dicyanocyclohexane.

In case both CN-groups are bound to primary C-atoms of the alkylene chain the aliphatic dinitrile NC-L-CN may be selected from dinitriles wherein L is C₅ to C₂₀ alkylene. "Primary C-atom" denotes a C-atom which is bound to only one other C-atom of the alkylene chain. L may inter alia be selected from n-pentylene, iso-pentylene, 2,2-dimethylpropylene, n-hexylene, n-heptylene, n-octylene, n-nonylene, n-decylene, n-undecylene, n-dodecylene, and the like. Examples of such dinitriles are pimelonitrile (1,7-heptanedinitrile), suberonitrile (1,8-octanedinitrile), azelanitrile (1,9-nonanedinitrile), 1,10-decanedinitrile, 1,11-undecanedinitrile, and 1,12-dodecanedinitrile. Preferably L is selected from C₆ to C₂₀ alkylene, more preferred from C₆ to C₁₀ alkylene, more preferred from C₇ to C₁₀ alkylene.

According to one embodiment L is (CH₂)ₙ with n = 5 to 20, more preferred L is (CH₂)ₙ with n = 6 to 20, even more preferred L is (CH₂)ₙ with n = 6 to 10, most preferred L is (CH₂)ₙ with n = 7 to 10.

In case at least one CN-group is not bound to a primary C-atom of the alkylene chain the aliphatic dinitrile NC-L-CN may be selected from dinitriles wherein L is C₄ to C₂₀ alkylene. "At least one CN-group is not bound to a primary C-atom of the alkylene chain" means that at least one CN-group is bound to a secondary or tertiary C-atom of the alkylene chain. Preferably at least one CN-group is bound to a secondary C-atom, i.e. at least one CN-group is bound to a C-atom which is bound to two other C-atoms of the alkylene chain. L may inter alia be selected from n-butylene, n-pentylene, iso-pentylene, 2,2-dimethylpropylene, n-hexylene, 2-methylpentylene, 3-methylpentylene, n-heptylene, n-octylene, n-nonylene, n-decylene, n-undecylene, n-dodecylene, and the like. Examples of such dinitriles are 2-methyl glutarontrile, 2-methyl adiponitrile, 2-methyl pimelonitrile, 2-methyl suberonitrile, 2-methyl azelanitrile, 2-ethyl glutaronitrile, 2-ethyl adiponitrile, 2-ethyl pimelonitrile, 2-ethyl suberonitrile, and 2-ethyl azelanitrile. Preferably L is C₄ to C₁₀ alkylene, more preferred L is C₄ to C₈ alkylene, most preferred is 2-methylglutaronitrile.

Preferred examples of dinitriles suitable as additives for reducing metal leaching are pimelonitrile, suberonitrile, azelanitrile, 1,10-decanedinitrile, 1,11- undecanedinitrile, 1,12-dodecanedinitrile, 2-methylglutaronitrile, and 1,4-dicyanocyclohexane.

The dinitriles of formula (I) are used for reducing the metal leaching from electrode active material present in an electrochemical cell. An electrochemical cell usually comprises an anode comprising an anode active material, a cathode comprising a cathode active material, and an electrolyte composition. The dinitriles of formula (I) may be used in different ways, e.g. during preparation of the electrodes comprising the electrode active material or the electrodes or the electrode active material may be treated with the dinitriles of formula (I) or the dinitriles may be added to the electrolyte composition used in the electrochemical cell. Preferably the dinitriles of formula (I) are added to the electrolyte composition of the electrochemical cell.

In case the dinitriles of formula (I) are added to the electrolyte composition of the electrochemical cell the minimum total concentration of the dinitriles of formula (I) in the electrolyte composition is usually at least 0.01 wt.-%, based on the total weight of the electrolyte composition. The maximum total concentration of the dinitriles of formula (I) in the electrolyte composition is usually 10 wt.-%, based on the total weight of the electrolyte composition. Usually the electrolyte composition contains in total 0.01 to 10 wt.-% the dinitriles of formula (I), preferably the electrolyte composition contains in total 0.05 to 5 wt.-% the dinitriles of formula (I), more preferred the electrolyte composition contains in total 0.1 to 3 wt.-% the dinitriles of formula (I), based on the total weight of the electrolyte composition. The term "wt.-%" as used herein means percent by weight.

The electrolyte composition contains at least one aprotic organic solvent (i), more preferred at least two aprotic organic solvents. According to one embodiment the electrolyte composition may contain up to ten aprotic organic solvents.

The electrolyte composition contains at least one aprotic organic solvent (i). The at least one aprotic organic solvent may be selected from optionally fluorinated aprotic organic solvents, i.e. from fluorinated and non-fluorinated aprotic organic solvents. The electrolyte composition may contain a mixture of fluorinated and non-fluorinated aprotic organic solvents.

The aprotic organic solvent is preferably selected from cyclic and acyclic organic carbonates, acyclic ethers and polyethers, cyclic ethers, cyclic and acyclic acetales and ketales, orthocarboxylic acids esters, cyclic and acyclic esters and diesters of carboxylic acids cyclic and acyclic sulfones, cyclic and acyclic nitriles and dinitriles and cyclic and acyclic phosphates and mixtures thereof. The aforementioned solvents may optionally fluorinated, i.e. they may be non-fluorinated or fluorinated.

Examples of optionally fluorinated cyclic carbonates are ethylene carbonate (EC), propylene carbonate (PC) and butylene carbonate (BC), wherein one or more H may be substituted by F and/or an C₁ to C₄ alkyl group, e.g. 4-methyl ethylene carbonate, monofluoroethylene carbonate (FEC), and cis- and trans-difluoroethylene carbonate. Preferred optionally fluorinated cyclic carbonates are ethylene carbonate, monofluoroethylene carbonate, and propylene carbonate, in particular ethylene carbonate.

Examples of optionally fluorinated acyclic carbonates are di-C₁-C₁₀-alkylcarbonates, wherein each alkyl group is selected independently from each other and wherein one or more H may be substituted by F. Preferred are optionally fluorinated di-C₁-C₄-alkylcarbonates. Examples are e.g. diethyl carbonate (DEC), ethyl methyl carbonate (EMC), 2,2,2-trifluoroethyl methyl carbonate (TFEMC), dimethyl carbonate (DMC), trifluoromethyl methyl carbonate (TFMMC), and methylpropyl carbonate. Preferred acyclic carbonates are diethyl carbonate (DEC), ethyl methyl carbonate (EMC), and dimethyl carbonate (DMC).

In one embodiment of the invention the electrolyte composition contains mixtures of optionally fluorinated acyclic organic carbonates and cyclic organic carbonates at a ratio by weight of from 1:10 to 10:1, preferred of from 3:1 to 1:1.

Examples of optionally fluorinated acyclic ethers and polyethers are optionally fluorinated di-C₁-C₁₀-alkylethers, optionally fluorinated di-C₁-C₄-alkyl-C₂-C₆-alkylene ethers, optionally fluorinated polyethers, and fluorinated ethers of formula R'-(O-CFₚH₂₋ₚ)_{q}-R" wherein R' is a C₁-C₁₀ alkyl group or a C₃-C₁₀ cycloalkyl group, wherein one or more H of an alkyl and/or cycloalkyl group are substituted by F; R" is H, F, a C₁-C₁₀ alkyl group, or a C₃-C₁₀ cycloalkyl group, wherein one or more H of an alkyl and/or cycloalkyl group are substituted by F; p is 1 or 2; and q is 1, 2 or 3.

According to the invention each alkyl group of the optionally fluorinated di-C₁-C₁₀-alkylethers is selected independently from the other wherein one or more H of an alkyl group may be substituted by F. Examples of optionally fluorinated di-C₁-C₁₀-alkylethers are dimethylether, ethyl-methylether, diethylether, methylpropylether, diisopropylether, di-n-butylether, 1,1,2,2-tetrafluoroethyl-2,2,3,3-tetrafluoropropyl ether (CF₂HCF₂CH₂OCF₂CF₂H), and 1H,1H,5H-perfluoropentyl-1,1,2,2-tetrafluoroethylether (CF₂H(CF₂)₃CH₂OCF₂CF₂H).

Examples of optionally fluorinated di-C₁-C₄-alkyl-C₂-C₆-alkylene ethers are 1,2-dimethoxyethane, 1,2-diethoxyethane, diglyme (diethylene glycol dimethyl ether), triglyme (triethyleneglycol dimethyl ether), tetraglyme (tetraethyleneglycol dimethyl ether), and diethylenglycoldiethylether.

Examples of suitable optionally fluorinated polyethers are polyalkylene glycols wherein one or more H of an alkyl or alkylene group may be substituted by F, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl- end-capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of fluorinated ethers of formula R'-(O-CFₚH₂₋ₚ)_{q}-R" are 1,1,2,2-tetrafluoroethyl-2,2,3,3-tetrafluoropropyl ether (CF₂HCF₂CH₂OCF₂CF₂H), and 1H,1H,5H-perfluoropentyl-1,1,2,2-tetrafluoroethylether (CF₂H(CF₂)₃CH₂OCF₂CF₂H).

Examples of optionally fluorinated cyclic ethers are 1,4-dioxane, tetrahydrofuran, and their derivatives like 2-methyl tetrahydrofuran wherein one or more H of an alkyl group may be substituted by F.

Examples of optionally fluorinated acyclic acetals are 1,1-dimethoxymethane and 1,1-diethoxymethane. Examples of cyclic acetals are 1,3-dioxane, 1,3-dioxolane, and their derivatives such as methyl dioxolane wherein one or more H may be substituted by F.

Examples of optionally fluorinated acyclic orthocarboxylic acid esters are tri-C₁-C₄ alkoxy methane, in particular trimethoxymethane and triethoxymethane. Examples of suitable cyclic orthocarboxylic acid esters are 1,4-dimethyl-3,5,8-trioxabicyclo[2.2.2]octane and 4-ethyl-1-methyl-3,5,8-trioxabicyclo[2.2.2]octane wherein one or more H may be substituted by F.

Examples of optionally fluorinated acyclic esters of carboxylic acids are ethyl and methyl formiate, ethyl and methyl acetate, ethyl and methyl proprionate, and ethyl and methyl butanoate, and esters of dicarboxylic acids like 1,3-dimethyl propanedioate wherein one or more H may be substituted by F. An example of a cyclic ester of carboxylic acids (lactones) is γ-butyrolactone.

Examples of optionally fluorinated cyclic and acyclic sulfones are ethyl methyl sulfone, dimethyl sulfone, and tetrahydrothiophene-S,S-dioxide (sulfolane).

Examples of optionally fluorinated cyclic and acyclic nitriles and dinitriles are adipodinitrile, acetonitrile, propionitrile, and butyronitrile wherein one or more H may be substituted by F.

Examples of optionally fluorinated cyclic and acyclic phosphates are trialkyl phosphates wherein one or more H of an alkyl group may be substituted by F like trimethyl phosphate, triethyl phosphate, and tris(2,2,2-trifluoroethyl)phosphate.

More preferred the aprotic organic solvent(s) are selected from optionally fluorinated ethers and polyethers, optionally fluorinated cyclic and acyclic organic carbonates, optionally fluorinated cyclic and acyclic esters and diesters of carboxylic acids and mixtures thereof. Even more preferred the aprotic organic solvent(s) are selected from optionally fluorinated ethers and polyethers, and optionally fluorinated cyclic and acyclic organic carbonates, and mixtures thereof.

According to one embodiment the electrolyte composition contains at least solvent selected from fluorinated ethers and polyethers, e.g. compounds of formula fluorinated ethers of formula R'-(O-CFₚH₂₋ₚ)_{q}-R" as defined above like CF₂HCF₂CH₂OCF₂CF₂H or CF₂H(CF₂)₃CH₂OCF₂CF₂H.

According to another embodiment, the electrolyte composition contains at least one solvent selected from fluorinated cyclic carbonate like 1-fluoro ethyl carbonate.

According to a further embodiment the electrolyte composition contains at least one solvent selected from fluorinated cyclic carbonate, e.g. 1-fluoro ethyl carbonate, and at least one solvent selected from fluorinated ethers and polyethers, e.g. compounds of formula fluorinated ethers of formula R'-(O-CFᵣH₂₋ᵣ)ₛ-R" as defined above like CF₂HCF₂CH₂OCF₂CF₂H or CF₂H(CF₂)₃CH₂OCF₂CF₂H.

According to another embodiment the electrolyte composition contains at least one fluorinated cyclic carbonate, e.g. 1-fluoro ethyl carbonate and at least one non-fluorinated acyclic organic carbonate, e.g. dimethyl carbonate, diethyl carbonate or ethyl methyl carbonate.

The electrolyte composition contains at least one lithium ion containing conducting salt (ii). The electrolyte composition functions as a medium that transfers ions participating in the electrochemical reaction taking place in an electrochemical cell. The lithium ion containing conducting salt(s) (ii) present in the electrolyte composition are usually solvated in the aprotic organic solvent(s) (i). Examples of lithium ion containing conducting salts are
- Li[F₆₋ₓP(C_{y}F_{2y+1})ₓ], wherein x is an integer in the range from 0 to 6 and y is an integer in the range from 1 to 20;
   Li[B(R^{I})₄], Li[B(R^{I})₂(OR^{II}O)] and Li[B(OR^{II}O)₂] wherein each R^{I} is independently from each other selected from F, Cl, Br, I, C₁-C₄ alkyl, C₂-C₄ alkenyl, C₂-C₄ alkynyl, OC₁-C₄ alkyl, OC₂-C₄ alkenyl, and OC₂-C₄ alkynyl wherein alkyl, alkenyl, and alkynyl may be substituted by one or more OR^{III}, wherein R^{III} is selected from C₁-C₆ alkyl, C₂-C₆ alkenyl, and C₂-C₆ alkynyl, and
   (OR^{II}O) is a bivalent group derived from a 1,2- or 1,3-diol, a 1,2- or 1,3-dicarboxlic acid or a 1,2- or 1,3-hydroxycarboxylic acid, wherein the bivalent group forms a 5- or 6-membered cycle via the both oxygen atoms with the central B-atom;
- LiClO₄; LiAsF₆; LiCF₃SO₃; Li₂SiF₆; LiSbF₆; LiAlCl₄, Li(N(SO₂F)₂), lithium tetrafluoro (oxalato) phosphate; lithium oxalate; and
- salts of the general formula Li[Z(CₙF₂ₙ₊₁SO₂)ₘ], where m and n are defined as follows:
   m = 1 when Z is selected from oxygen and sulfur,
   m = 2 when Z is selected from nitrogen and phosphorus,
   m = 3 when Z is selected from carbon and silicon, and
   n is an integer in the range from 1 to 20.

Suited 1,2- and 1,3-diols from which the bivalent group (OR^{II}O) is derived may be aliphatic or aromatic and may be selected, e.g., from 1,2-dihydroxybenzene, propane-1,2-diol, butane-1,2-diol, propane-1,3-diol, butan-1,3-diol, cyclohexyl-trans-1,2-diol and naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diole is 1,1,2,2-tetra(trifluoromethyl)-1,2-ethane diol.

"Fully fluorinated C₁-C₄ alkyl group" means, that all H-atoms of the alkyl group are substituted by F.

Suited 1,2- or 1,3-dicarboxlic acids from which the bivalent group (OR^{II}O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acid are optionally substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR^{II}O) is derived may be aliphatic or aromatic, for example salicylic acid, tetrahydro salicylic acid, malic acid, and 2-hydroxy acetic acid, which are optionally substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R^{I})₄], Li[B(R^{I})₂(OR^{II}O)] and Li[B(OR^{II}O)₂] are LiBF₄, lithium difluoro oxalato borate and lithium dioxalato borate.

Preferably the at least one conducting salt (ii) is selected from LiPF₆, LiAsF₆, LiSbF₆, LiCF₃SO₃, LiBF₄, lithium bis(oxalato) borate, lithium difluoro(oxalato) borate, LiClO₄, LiN(SO₂C₂F₅)₂, LiN(SO₂CF₃)₂, LiN(SO₂F)₂, and LiPF₃(CF₂CF₃)₃, more preferred the conducting salt (ii) is selected from LiPF₆ and LiBF₄, and the most preferred conducting salt (ii) is LiPF₆.

The at least one conducting salt is usually present at a minimum concentration of at least 0.1 mol/l, preferably the concentration of the at least one conducting salt is 0.5 to 2 mol/l based on the entire electrolyte composition.

The electrolyte composition may contain at least one further additive different from the dinitriles of formula (I). The further additive may be selected from polymers, film forming additives, flame retardants, overcharging additives, wetting agents, HF and/or H₂O scavenger, stabilizer for LiPF₆ salt, ionic solvation enhancer, corrosion inhibitors, and gelling agents, and the like.

Examples for polymers used in electrolyte compositions are polyvinylidene fluoride, polyvinylidene-hexafluoropropylene copolymers, polyvinylidene-hexafluoropropylene-chlorotrifluoroethylene copolymers, Nafion, polyethylene oxide, polymethyl methacrylate, polyacrylonitrile, polypropylene, polystyrene, polybutadiene, polyethylene glycol, polyvinylpyrrolidone, polyaniline, polypyrrole and/or polythiophene. These polymers may be added to electrolyte compositions containing a solvent or solvent mixture in order to convert liquid electrolytes into quasi-solid or solid electrolytes and thus to improve solvent retention, especially during ageing.

Examples of flame retardants are organic phosphorous compounds like cyclophosphazenes, phosphoramides, alkyl and/or aryl tri-substituted phosphates, alkyl and/or aryl di- or tri-substituted phosphites, alkyl and/or aryl di- substituted phosphonates, alkyl and/or aryl tri-substituted phosphines, and fluorinated derivatives thereof.

Examples of HF and/or H₂O scavenger are optionally halogenated cyclic and acyclic silylamines.

Examples of overcharge protection additives are cyclohexylbenzene, o-terphenyl, p-terphenyl, and biphenyl and the like, preferred are cyclohexylbenzene and biphenyl.

Another class of additives are film forming additives, also called SEI-forming additives. An SEI forming additive as used herein is a compound which decomposes on an electrode to form a passivation layer on the electrode which prevents degradation of the electrolyte and/or the electrode. In this way, the lifetime of a battery is significantly extended. Preferably the SEI forming additive forms a passivation layer on the anode. An anode in the context of the present invention is understood as the negative electrode of a battery. Preferably, the anode has a reduction potential of 1 Volt or less against lithium such as a lithium intercalating graphite anode. In order to determine if a compound qualifies as anode film forming additive, an electrochemical cell can be prepared comprising a graphite electrode and a metal counter electrode, and an electrolyte containing a small amount of said compound, typically from 0.1 to 10 wt.-% of the electrolyte composition, preferably from 0.2 to 5 wt.-% of the electrolyte composition. Upon application of a voltage between anode and lithium metal, the differential capacity of the electrochemical cell is recorded between 0.5 V and 2 V. If a significant differential capacity is observed during the first cycle, for example -150 mAh/V at 1 V, but not or essentially not during any of the following cycles in said voltage range, the compound can be regarded as SEI forming additive.

According to the present invention the electrolyte composition preferably contains at least one SEI forming additive. SEI forming additives are known to the person skilled in the art. More preferred the electrolyte composition contains at least one SEI forming selected from vinylene carbonate and its derivatives such as vinylene carbonate and methylvinylene carbonate; fluorinated ethylene carbonate and its derivatives such as monofluoroethylene carbonate, cis- and trans-difluorocarbonate; organic sultones such as propylene sultone, propane sultone and their derivatives; ethylene sulfite and its derivatives; oxalate comprising compounds such as lithium oxalate, oxalato borates including dimethyl oxalate, lithium bis(oxalate) borate, lithium difluoro (oxalato) borate, and ammonium bis(oxalato) borate, and oxalato phosphates including lithium tetrafluoro (oxalato) phosphate; and sulfur containing additives as described in detail in WO 2013/026854 A1, in particular the sulfur containing additives shown on page 12 line 22 to page 15, line 10.

A compound added as additive may have more than one effect in the electrolyte composition and the device comprising the electrolyte composition. E.g. lithium oxalato borate may be added as additive enhancing the SEI formation but it may also be added as conducting salt.

In case one or more further additives are present, the total concentration of all further additives is at least 0.05 wt.-%, based on the total amount of the electrolyte composition, preferred the total concentration of the one or more further additives is 0.1 to 30 wt.-%, more preferred 0.5 to 10 wt.-%.

According to one embodiment of the present invention the electrolyte composition contains at least one SEI forming additive, all as described above or as described as being preferred.

The electrolyte composition is preferably non-aqueous. In one embodiment of the present invention, the water content of the electrolyte composition is preferably below 100 ppm, based on the weight of the respective electrolyte composition, more preferred below 50 ppm, most preferred below 30 ppm. The water content may be determined by titration according to Karl Fischer, e.g. described in detail in DIN 51777 or ISO760: 1978.

In one embodiment of the present invention, the HF-content of the electrolyte composition is preferably below 100 ppm, based on the weight of the respective electrolyte composition, more preferred below 50 ppm, most preferred below 30 ppm. The HF content may be determined by titration.

The electrolyte composition is preferably liquid at working conditions; more preferred it is liquid at 1 bar and 25 °C, even more preferred the electrolyte composition is liquid at 1 bar and -15 °C, in particular the electrolyte composition is liquid at 1 bar and -30 °C, even more preferred the electrolyte composition is liquid at 1 bar and -50 °C. Such liquid electrolyte compositions are particularly suitable for outdoor applications, for example for use in automotive batteries.

The electrolyte compositions are prepared by methods which are known to the person skilled in the field of the production of electrolytes, generally by dissolving the dinitriles of formula (I), the lithium conducting salt(s) (ii) and optionally additional additives (iv) as described above in the aprotic solvent(s) (i).

The dinitriles of formula (I) are used for reducing the metal leaching from electrode active material present in an electrochemical cell. "Metal leaching from electrode active material" means, that metal ions originating from the electrode active material are dissolved in the electrolyte composition although these metal ions should remain within the electrode active material during proper use of the electrochemical cell. In particular, electrode active materials containing transition metal compounds are prone to undesired metal leaching. Such transition metal compounds are very often used as cathode active materials for lithium ion batteries. "Electrode active material" includes both anode active and cathode active materials.

According to one embodiment the dinitriles of formula (I) are used for reducing the leaching of transition metal(s) from electrode active material comprising a transition metal compound, preferably from electrode active material containing at least one transition metal selected from Mn, Co and Ni, more preferred from the cathode active materials described below in detail.

The electrochemical cell may be a secondary lithium battery, a double layer capacitor, or a lithium ion capacitor, preferably the electrochemical cell is a secondary lithium battery, more preferred the electrochemical cell is a lithium ion battery.
The general construction of such electrochemical devices is known and is familiar to the person skilled in this art.

The term "secondary lithium battery" as used herein means a secondary electrochemical cell, wherein the anode comprises lithium metal or lithium ions sometime during the charge/discharge of the cell. The anode may comprise lithium metal or a lithium metal alloy, a material occluding and releasing lithium ions, or other lithium containing compounds; e.g. the lithium battery may be a lithium ion battery, a lithium/sulphur battery, or a lithium/selenium battery.

A lithium ion battery comprises an anode comprising an anode active material that can reversibly occlude and release lithium ions and a cathode active material that can reversibly occlude and release lithium ions. The cathode active material may be selected from lithium transition metal oxides and lithium transition metal phosphates.

Examples of lithium transition metal phosphates of olivine structure are LiFePO₄; LiNiPO₄; LiMnPO₄; and LiCoPO₄. Examples of mixed lithium transition metal oxides are LiCoO₂, LiNiO₂, LiMnO₂, mixed lithium transition metal oxides with layer structure, manganese containing spinels, and lithium intercalating mixed oxides of Ni, Al and at least one second transition metal.

Preferably the at least one cathode active material is selected from mixed lithium transition metal oxides containing Mn and at least one second transition metal; lithium intercalating mixed oxides containing Ni, Al and at least one second transition metal; LiMnPO₄; LiNiPO₄; and LiCoPO₄.

Examples of mixed lithium transition metal oxides containing Mn and at least one second transition metal are lithium transition metal oxides with layered structure of formula (II)

Li₁₊ₑ(NiₐCo_{b}Mn_{c}M_{d})₁₋ₑO₂ (II)

wherein
a is in the range of from 0.05 to 0.9, preferred in the range of 0.1 to 0.8,
b is in the range of from zero to 0.35,
c is in the range of from 0.1 to 0.9, preferred in the range of 0.2 to 0.8,
d is in the range of from zero to 0.2,
e is in the range of from zero to 0.3, preferred in the range of > zero to 0.3, more preferred in the range of 0.05 to 0.3,
with a + b+ c+ d = 1, and
M being one or more metals selected from Na, K, Al, Mg, Ca, Cr, V, Mo, Ti, Fe, W, Nb, Zr, and Zn.

Cobalt containing compounds of formula (II) are also named NCM.

Lithium transition metal oxides with layered structure of formula (II) wherein e is larger than zero are also called overlithiated.

Preferred lithium transition metal oxides with layered structure of formula (II) are compounds forming a solid solution wherein a LiM'O₂ phase in which M' is Ni, and optionally one or more transition metals selected from Co and Mn and a Li₂MnO₃ phase are mixed and wherein one or more metal M as defined above may be present. The one or more metals M are also called " dopants" or "doping metal" since they are usually present at minor amounts, e.g. at maximum 10 mol-% M or at maximum 5 mol-% M or at maximum 1 mol.-% based on the total amount of metal except lithium present in the transition metal oxide. In case one or more metals M are present, they are usually present in an amount of at least 0.01 mol-% or at least 0.1 mol-% based on the total amount of metal except lithium present in the transition metal oxide. These compounds are also expressed by formula (IIa)

z LiM'O₂ • (1-z) Li₂MnO₃ (IIa)

wherein M' is Ni and at least one metal selected from Mn and Co;
z is 0.1 to 0.8,
and wherein one or more metals selected from Na, K, Al, Mg, Ca, Cr, V, Mo, Ti, Fe, W, Nb, Zr, and Zn may be present.

Electrochemically, the Ni and if present Co atoms in the LiM'O₂ phase participate in reversible oxidation and reduction reactions leading to Li-ions deintercalation and intercalation, respectively, at voltages below 4.5 V vs. Li⁺/Li, while the Li₂MnO₃ phase participates only in oxidation and reduction reactions at voltages equal or above 4.5 V vs. Li⁺/Li given that Mn in the Li₂MnO₃ phase is in its +4 oxidation state. Therefore, electrons are not removed from the Mn atoms in this phase but from the 2p orbitals of oxygen ions, leading to the removal of oxygen for the lattice in the form of O₂ gas at least in the first charging cycling.

These compounds are also called HE-NCM due to their higher energy densities in comparison to usual NCMs. Both HE-NCM and NCM have operating voltages of about 3.0 to 3.8 V against Li/Li⁺, but high cut off voltages have to be used both for activating and cycling of HE-NCMs to actually accomplish full charging and to benefit from their higher energy densities. Usually the upper cut-off voltage for the cathode during charging against Li/Li⁺ is of at least 4.5 V for activating the HE-NCM, preferably of at least 4.6 V, more preferred of at least 4.7 V and even more preferred of at least 4.8 V. The term "upper cut-off voltage against Li/Li⁺ during charging" of the electrochemical cell means the voltage of the cathode of the electrochemical cell against a Li/Li⁺ reference anode which constitute the upper limit of the voltage at which the electrochemical cell is charged. Examples of HE-NCMs are
0.33Li₂MnO₃•0.67Li(Ni_{0.4}Co_{0.2}Mn_{0.4})O₂, 0.42Li₂MnO₃•0.58Li(Ni_{0.4}Co_{0.2}Mn_{0.4})O₂,
0.50Li₂MnO₃•0.50Li(Ni_{0.4}Co_{0.2}Mn_{0.4})O₂, 0.40Li₂MnO₃•0.60Li(Ni_{0.8}Co_{0.1}Mn_{0.1})O₂, and
0.42Li₂MnO₃•0.58Li(Ni_{0.6}Mn_{0.4})O₂.

Examples of manganese-containing transition metal oxides with layer structure of formula (II) wherein d is zero are LiNi_{0.33}Mn_{0.67}O₂, LiNi_{0.25}Mn_{0.75}O₂, LiNi_{0.35}Co_{0.15}Mn_{0.5}O₂, LiNi_{0.21}Co_{0.08}Mn_{0.71}O₂, LiNi_{0.22}Co_{0.12}Mn_{0.66}O₂, LiNi_{0.8}Co_{0.1}Mn_{0.1}O₂, LiNi_{0.6}Co_{0.2}Mn_{0.2}O₂, and LiNi_{0.5}Co_{0.2}Mn_{0.3}O₂. It is preferred that the transition metal oxides of general formula (II) wherein d is zero do not contain further cations or anions in significant amounts.

Examples of manganese-containing transition metal oxides with layer structure of formula (II) wherein d is larger than zero are 0.33Li₂MnO₃•0.67Li(Ni_{0.4}Co_{0.2}Mn_{0.4})O₂, 0.42Li₂MnO₃•0.58Li(Ni_{0.4}Co_{0.2}Mn_{0.4})O₂, 0.50Li₂MnO₃•0.50Li(Ni_{0.4}Co_{0.2}Mn_{0.4})O₂, 0.40Li₂MnO₃•0.60Li(Ni_{0.8}Co_{0.1}Mn_{0.1})O₂, and 0.42Li₂MnO₃•0.58Li(Ni_{0.6}Mn_{0.4})O₂ wherein one or more metal M selected from Na, K, Al, Mg, Ca, Cr, V, Mo, Ti, Fe, W, Nb, Zr, and Zn may be present. The one or more doping metal is preferably present up to 1 mol-%, based on the total amount of metal except lithium present in the transition metal oxide.

Other preferred compounds of formula (II) are Ni-rich compounds, wherein the content of Ni is at least 50 mol.% based on the total amount of transition metal present. This includes compounds of formula (IIb)

Li₁₊ₑ(NiₐCo_{b}Mn_{c}M_{d})₁₋ₑO₂ (IIb)

wherein
a is in the range of from 0.5 to 0.9, preferred in the range of 0.5 to 0.8,
b is in the range of from zero to 0.35,
c is in the range of from 0.1 to 0.5, preferred in the range of 0.2 to 0.5,
d is in the range of from zero to 0.2,
e is in the range of from zero to 0.3,
with a + b+ c+ d = 1, and
M being one or more metals selected from Na, K, Al, Mg, Ca, Cr, V, Mo, Ti, Fe, W, Nb, Zr, and Zn.

Examples of Ni-rich compounds of formula (I) are Li[Ni_{0.8}Co_{0.1}Mn_{0.1}]O₂ (NCM 811), Li[Ni_{0.6}Co_{0.2}Mn_{0.2}]O₂ (NCM 622), and Li[Ni_{0.5}Co_{0.2}Mn_{0.3}]O₂ (NCM 523).

Further examples of mixed lithium transition metal oxides containing Mn and at least one second transition metal are manganese-containing spinels of formula (III)

Li₁₊ₜM₂₋ₜO₄₋ₛ (III)

wherein
s is 0 to 0.4,
t is 0 to 0.4, and
M is Mn and at least one further metal selected from Co and Ni, preferably M is Mn and Ni and optionally Co, i.e. a part of M is Mn and another part of Ni, and optionally a further part of M is selected from Co.

The cathode active material may also be selected from lithium intercalating mixed oxides containing Ni, Al and at least one second transition metal, e.g. from lithium intercalating mixed oxides of Ni, Co and Al. Examples of mixed oxides of Ni, Co and Al are compounds of formula (IV)

Li[NiₕCoᵢAlⱼ]O₂ (IV)

wherein
h is 0.7 to 0.9, preferred 0.8 to 0.87, and more preferred 0.8 to 0.85;
i is 0.15 to 0.20; and
j is 0.02 to 10, preferred 0.02 to 1, more preferred 0.02 to 0.1, and most preferred 0.02 to 0.03.

The cathode active material may also be selected from LiMnPO₄, LiNiPO₄ and LiCoPO₄. These phosphates show usually olivine structure and usually upper cut-off voltages of at least 4.5 V have to be used for charging.

The cathode may further comprise electrically conductive materials like electrically conductive carbon and usual components like binders. Compounds suited as electrically conductive materials and binders are known to the person skilled in the art. For example, the cathode may comprise carbon in a conductive polymorph, for example selected from graphite, carbon black, carbon nanotubes, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile.

The anode comprises an anode active material that can reversibly occlude and release lithium ions or is capable to form an alloy with lithium. In particular carbonaceous material that can reversibly occlude and release lithium ions can be used as anode active material. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to intercalate lithium ions. The silicon may be used in different forms, e.g. in the form of nanowires, nanotubes, nanoparticles, films, nanoporous silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. It is also possible to use a silicon/carbon mixture as anode active material.

Other possible anode active materials are lithium ion intercalating oxides of Ti, e.g. Li₄Ti₅O₁₂.

Preferably the anode active material is selected from carbonaceous material that can reversibly occlude and release lithium ions, particularly preferred the carbonaceous material that can reversibly occlude and release lithium ions is selected from crystalline carbon, hard carbon and amorphous carbon, in particular preferred is graphite. In another preferred embodiment the anode active is selected from silicon that can reversibly occlude and release lithium ions, preferably the anode comprises a thin film of silicon or a silicon/carbon mixture. In a further preferred embodiment the anode active is selected from lithium ion intercalating oxides of Ti.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The secondary lithium cells may contain further constituents customary per se, for example separators, housings, cable connections etc. The housing may be of any shape, for example cuboidal or in the shape of a cylinder, the shape of a prism or the housing used is a metal-plastic composite film processed as a pouch. Suited separators are for example glass fiber separators and polymer-based separators like polyolefin separators.

Several secondary lithium cells may be combined with one another, for example in series connection or in parallel connection. Series connection is preferred. The secondary lithium as described above may be used in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers. But the secondary lithium cells can also be used for stationary energy stores.

Even without further statements, it is assumed that a skilled person is able to utilize the above description in its widest extent. Consequently, the preferred embodiments and examples are to be interpreted merely as a descriptive enclosure which in no way has any limiting effect at all.

The invention is illustrated by the examples which follow, which do not, however, restrict the invention.

### Examples

### I. Electrolyte compositions

A base electrolyte composition 1 (EL 1) was prepared by adding 1 M LiPF₆ to a mixture of 30 wt.-% ethylene carbonate (EC) and 70 wt.-% ethyl methyl carbonate (EMC). A second base electrolyte composition 2 (EL 2) was prepared by adding 1 M LiPF₆, 2.5 wt.-% vinylene carbonate (VC), 1.75 wt.-% fluoroethylene carbonate (FEC) and 0.15 wt.-% LiBF₄ to a mixture of 30 vol.-% EC and 70 vol.-% diethyl carbonate. Different dinitriles were added to these base electrolyte compositions, the exact compounds and amounts are shown in Tables 1 and 2. The molar concentration of the dinitriles is the same in all compositions.

### II. Electrochemical cells

Commercially available wound pouch dry cells (lithium cobalt oxide vs graphite) were dried at 70 °C *in vacuo* for 24 h and were then filled with 700 µL electrolyte under Argon atmosphere. After 5 h rest at room temperature the cells were evacuated and sealed. The cells were then cycled between 2.75 and 4.4 V for 5 cycles, charged to 4.4 V and stored at 85 °C for 24 h. The results are summarized in Table 1.

### III. Change of cell volume

The volume was measured by Archimedes principle. Before and after storing the cells for 24 h at 85 °C the cells were cooled down to room temperature for 2 h and their weight in air and fully immersed in 25 °C water was determined. The difference of the two weights divided by the density of water at 25 °C afforded the volume change of the cells. The results are displayed in Table 1 in the column "Delta Vol".

### IV. Dissolution of cobalt from the cathode active material

Dissolution of cobalt determined as amount of Co detected at the graphite electrode using ICP-OES method (inductively coupled plasma optical emission spectrometry) after storage at 85°C for 24h. The lower the value the better. The results are shown in Tables 1 and 2. The values of Table 1 are normalized to example 2 (comparative), wherein the value of example 4 (comparative) was assigned a value of 100.

**Table 1**

| **Example** | **Additive** | **Additive concentration [wt.- %]** | **Base electrolyte** | **Initial capacity [mAh]** | **Co dissolution [ppm]** |
|---|---|---|---|---|---|
| 1 (comparative) | - | - | EL 1 | 231 | 77 |
| 2 (comparative) | Succinonitrile | 1.1 | EL 1 | 231 | 106 |
| 3 (comparative) | Glutaronitrile | 1.3 | EL 1 | 233 | 112 |
| 4 (comparative) | Adiponitrile | 1.5 | EL 1 | 230 | 100 |
| 5 (inventive) | 2-Methylglutaronitrile | 1.5 | EL 1 | 231 | 79 |
| 6 (inventive) | 1,4-Dicyanocyclohexane | 1.9 | EL 1 | 229 | 68 |

**Table 2**

| **Example** | **Additive** | **Additive concentration [wt.- %]** | **Base electrolyte** | **Co dissolution [mg]** |
|---|---|---|---|---|
| 7 (comparative) | - | - | EL 2 | 0.072 |
| 8 (comparative) | Succinonitrile | 1.1 | EL 2 | 0.090 |
| 9 (comparative) | Glutaronitrile | 1.3 | EL 2 | 0.098 |
| 10 (comparative) | Adiponitrile | 1.5 | EL 2 | 0.092 |
| 11 (inventive) | Pimelonitrile | 1.7 | EL 2 | 0.060 |
| 12 (inventive) | Suberonitrile | 1.9 | EL 2 | 0.046 |
| 13 (inventive) | Dodecanitrile | 2.7 | EL 2 | 0.031 |

The addition of a dinitrile of formula (I) to the electrolyte composition reduces the dissolution of Co from a cathode containing LiCO₂ as cathode active material in comparison to the addition of linear dinitriles with less C-atoms in the alkylene chain.

## Claims

1. Use of an aliphatic dinitrile of formula (I)
NC-L-CN (I)
wherein L is selected from C₅ to C₁₀ cycloalkylene, C₅ to C₂₀ alkylene in case both CN-groups are bound to primary C-atoms of the alkylene chain, and C₄ to C₂₀ alkylene in case at least one CN-group is not bound to a primary C-atom of the alkylene chain,
for reducing metal leaching from electrode active material present in electrochemical cells.

2. Use according to claim 1, wherein L is C₅ to C₂₀ alkylene and both CN-groups are bound to primary C-atoms of the alkylene chain.

3. Use according to claim 1 or 2, wherein L is (CH₂)ₙ with n = 6 to 20.

4. Use according to any of claims 1 to 3, wherein L is (CH₂)ₙ with n = 6 to 10.

5. Use according to claim 1, wherein L is a C₄ to C₂₀ alkylene and at least one CN-group is not bound to a primary C-atom of the alkylene chain.

6. Use according to claim 1, wherein L is a C₅ to C₁₀ cycloalkylene.

7. Use according to any of claims 1 to 6, wherein the aliphatic dinitrile of formula (I) is selected from pimelonitrile, suberonitrile, azelanitrile, 1,10-decanedinitrile, 1,11-undecanedinitrile, 1,12-dodecanedinitrile, 2-methylglutaronitrile, and 1,4-dicyanocyclohexane.

8. Use according to any of claims 1 to 7, wherein the electrochemical cell comprises an electrolyte composition and the aliphatic dinitriles of formula (I) are used by adding the dinitrile to the electrolyte composition.

9. Use according to claim 8, wherein the aliphatic dinitriles of formula (I) are used by adding the dinitrile to the electrolyte composition in a concentration of 0.01 to 10 wt.-%.

10. Use according to claim 8 or 9, wherein the electrolyte composition contains at least one aprotic organic solvent (i) is selected from cyclic and acyclic organic carbonates, di-C₁-C₁₀-alkylethers, di-C₁-C₄-alkyl-C₂-C₆-alkylene ethers and polyethers, cyclic ethers, cyclic and acyclic acetales and ketales, orthocarboxylic acids esters, cyclic and acyclic esters of carboxylic acids, cyclic and acyclic sulfones, and cyclic and acyclic nitriles and dinitriles

11. Use according to any of claims 1 to 10, wherein the electrochemical cell is a secondary lithium battery.

12. Use according to any of claims 1 to 11, wherein the electrochemical cell is a lithium ion battery.

13. Use according to any of claims 1 to 12, wherein the electrode comprises an electrode active material selected from transition metal compounds.

14. Use according to claim 13, wherein the electrode active material is selected from lithium transition metal oxides and lithium transition metal phosphates.

15. Use according to claim 13 or 14, wherein the electrode active material contains at least one transition metal selected from Mn, Co and Ni.
